(19)

Europäisches
Patentamt
European
Patent Office
Office européen
des brevets

(11) **EP 3 561 751 A1**

(12) **EUROPEAN PATENT APPLICATION**

(43) Date of publication:
**30.10.2019 Bulletin 2019/44**

(51) Int Cl.:
***G06Q 10/10*** *(2012.01)*

(21) Application number: **18209394.8**

(22) Date of filing: **30.11.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2018 IN 201821015698**

(71) Applicant: **Tata Consultancy Services Limited
Maharashtra (IN)**

(72) Inventors:
• **THANAWALA, Rajiv**
**40076 Maharashtra (IN)**
• **KULKARNI, Shalaka**
**411057 Pune, Maharashtra (IN)**
• **NAIK, Vijaya**
**400076 Maharashtra (IN)**

(74) Representative: **Goddar, Heinz J.
Boehmert & Boehmert
Anwaltspartnerschaft mbB
Pettenkoferstrasse 22
80336 München (DE)**

(54) **SYSTEMS AND METHODS FOR QUANTITATIVE ASSESSMENT OF USER EXPERIENCE (UX)
OF A DIGITAL PRODUCT**

(57) Systems and methods for quantitative assessment of a user experience (UX) of a digital product. The traditional systems and methods do not implement usage context information is not explicitly as an input while assessing the UX. Embodiments of the present disclosure provide for the quantitative assessment of the UX of the digital product by assigning, by one or more hardware processors (104), a default value to each of a plurality of Key Performance Attributes (KPAs) (205), computing a set of weightages (210), computing, based upon the set of weightages (210) and the default value assigned to each of the plurality of KPAs (205), a plurality of score values (209), generating, by using a set of relative weightage values (211), a total cut-off score (212) to assess the UX of the digital product, categorizing the digital product in either one of pre-defined categories based upon a comparison of the total cut-off score (212) and a UX Assessment score (213).

FIG. 2

**EP 3 561 751 A1**

**Description**

CROSS-REFERENCE TO RELATED APPLICATIONS AND PRIORITY

The present application claims priority to Indian Non-Provisional Patent Application No. 201821015698, filed on April 25, 2018

TECHNICAL FIELD

The disclosure herein generally relates to quantitative assessment of user experience (UX) of a digital product, and, more particularly, to systems and methods for quantitative assessment of user experience (UX) of a digital product.

BACKGROUND

Digital technology is increasingly important in achieving business goals, and its pervasive effects have resulted in the radical restructuring of entire industries. The rapid pace of digital innovation processes is particularly challenging as firms engage in the design of 'hybrid' or 'smart' products, via which digital components are embedded in traditional products. In most of the modern enterprises, information exists in digital form, be it the information being produced or consumed, and thus information service providers are seeking innovative ways to cope up with the dynamic changes in the industry, particularly in the digital publishing platform space, with the aim to deliver the right content to the addressable market with speed and agility.

User experience (UX) evaluation or assessment comprises methods, skills and tools utilized to uncover how a person (that is a user) perceives or experiences a digital product before, during and after interacting with it. It is non-trivial to assess user experience since user experience is subjective, context-dependent and dynamic over time.

Digital products must not only be efficient to use and easy to learn, but also provide a rich user experience. Such user experience can be measured on its levels of usability, aesthetics, and engagement. Second, firms need to clearly articulate the value proposition of each digital product, that is, how the digital product can create value for the users? In seeking to manage digital product and service innovation, uncertainty may creep across the firm's products, its digital environment, and organizational properties.

User experience (UX) measures and analyzes an overall experience of user(s) towards a digital product. The analysis of the user experience helps in changing or improving internal business strategies. Each user has his/her own specifications based on their need-driven expectations. For understanding the user needs with respect to a digital product, a UX methodology may capture user's view or perceptions, for the digital product usage, from different sources. However, due to qualitative nature of the perception or the UX, it is practically difficult to understand and have a standard unit of scale for measuring the perceptions received from different customers.

SUMMARY

Embodiments of the present disclosure present technological improvements as solutions to one or more of the above-mentioned technical problems recognized by the inventors in conventional systems. For example, in one embodiment, a method for quantitative assessment of a user experience (UX) of a digital product is provided, the method comprising: assigning, by one or more hardware processors, a set of default values to each of a pre-assessment question amongst a set of pre-assessment questionnaire, wherein each of the set of default values comprises a metric assigned to each of the pre-assessment question; computing, based upon a set of delta weights and each of the set of default values assigned to each of the pre-assessment question, a set of weightages for a plurality of Key Performance Attributes (KPAs), wherein each of the set of weightages corresponds to a KPA amongst the plurality of KPAs; computing, based upon the set of weightages and a sum total of a plurality of highest delta weights, a plurality of score values for the plurality of KPAs, wherein each of score value amongst the plurality of score values corresponds to a KPA amongst the plurality of KPAs; performing, based upon the plurality of score values, a plurality of steps, wherein the plurality of steps comprise: (i) obtaining, a set of relative weightage values for the plurality of KPAs, wherein each of relative weightage value amongst the set of relative weightage values correspond to a KPA amongst the plurality of KPAs; and (ii) generating, by using the set of relative weightage values, a total cut-off score to assess the UX of the digital product; categorizing the digital product in either one of pre-defined categories based upon a comparison of the total cut-off score and a UX assessment score, wherein the UX assessment score corresponds to a plurality of user interface (UI) components of the digital product; obtaining the set of delta weights based upon a set of user inputs on usage context of the digital product; identifying each of the plurality of highest delta weights from the set of delta weights, and wherein each of the identified highest delta weight corresponds to at least one of the plurality of KPAs; categorizing the digital product by computing, based upon a set of guidelines scores, a plurality of earned score values, wherein each of earned score

2

value amongst the plurality of earned score values corresponds to at least one of a KPA amongst the plurality of KPAs, and wherein each of a guidelines score amongst the set of guidelines scores correspond to at least one component of the digital product; assessing the UX of the digital product by auto-generating, based upon the UX assessment score, a set of recommendations by a recommendations engine on one or more UX shortcomings of the digital product upon determining at least one of: (i) the UX assessment score is less than the total cut-off score; and (ii) at least one earned score value amongst a plurality of earned score values is less than the corresponding KPA cut-off score; and providing suggestions by the recommendations engine for overcoming the one or more UX shortcomings of the digital product on determining at least one earned score value amongst the plurality of earned score values to be less than the corresponding KPA cut-off score.

In another aspect, there is provided a system for quantitative assessment of a user experience (UX) of a digital product, the system comprising a memory storing instructions; one or more communication interfaces; and one or more hardware processors coupled to the memory via the one or more communication interfaces, wherein the one or more hardware processors are configured by the instructions to: assign a set of default values to each of a pre-assessment question amongst a set of pre-assessment questionnaire, wherein each of the set of default values comprises a metric assigned to each of the pre-assessment question; compute, based upon a set of delta weights and each of the set of default values assigned to each of the pre-assessment question, a set of weightages for a plurality of Key Performance Attributes (KPAs), wherein each of the set of weightages corresponds to a KPA amongst the plurality of KPAs; compute, based upon the set of weightages and a sum total of a plurality of highest delta weights, a plurality of score values for the plurality of KPAs, wherein each of score value amongst the plurality of score values corresponds to a KPA amongst the plurality of KPAs; perform, based upon the plurality of score values, a plurality of steps, wherein the plurality of steps comprise: (i) obtain, a set of relative weightage values for the plurality of KPAs, wherein each of relative weightage value amongst the set of relative weightage values correspond to a KPA amongst the plurality of KPAs; and (ii) generate, by using the set of relative weightage values, a total cut-off score to assess the UX of the digital product; categorize the digital product in either one of pre-defined categories based upon a comparison of the total cut-off score and a UX assessment score, wherein the UX assessment score corresponds to a plurality of user interface (UI) components of the digital product; obtain the set of delta weights based upon a set of user inputs on usage context of the digital product, and wherein each of delta weight amongst the set of delta weights correspond to one of the plurality of KPAs; identify each of the plurality of highest delta weights from the set of delta weights, and wherein each of the highest delta weight corresponds to at least one of the plurality of KPAs; categorize the digital product by computing, based upon a set of guidelines scores, a plurality of earned score values, wherein each of earned score value amongst the plurality of earned score values corresponds to at least one of a KPA amongst the plurality of KPAs, and wherein each of a guidelines score amongst the set of guidelines scores correspond to at least one component of the digital product; assess the UX of the digital product by auto-generating, based upon the UX Assessment score, a set of recommendations by a recommendations engine on one or more UX shortcomings of the digital product upon determining at least one of: (i) the UX Assessment score is less than the total cut-off score; and (ii) at least one earned score value amongst a plurality of earned score values is less than the corresponding KPA cut-off score; and provide suggestions by the recommendations engine for overcoming the one or more UX shortcomings of the digital product on determining at least one earned score value amongst the plurality of earned score values to be less than the corresponding KPA cut-off score.

In yet another aspect, a non-transitory computer-readable medium having embodied thereon a computer readable program, wherein the computer readable program, when executed by one or more hardware processors, causes assigning, by one or more hardware processors, a set of default values to each of a pre-assessment question amongst a set of pre-assessment questionnaire, wherein each of the set of default values comprises a metric assigned to each of the pre-assessment question; computing, based upon a set of delta weights and each of the set of default values assigned to each of the pre-assessment question, a set of weightages for a plurality of Key Performance Attributes (KPAs), wherein each of the set of weightages corresponds to a KPA amongst the plurality of KPAs; computing, based upon the set of weightages and a sum total of a plurality of highest delta weights, a plurality of score values for the plurality of KPAs, wherein each of score value amongst the plurality of score values corresponds to a KPA amongst the plurality of KPAs; performing, based upon the plurality of score values, a plurality of steps, wherein the plurality of steps comprise: (i) obtaining, a set of relative weightage values for the plurality of KPAs, wherein each of relative weightage value amongst the set of relative weightage values correspond to a KPA amongst the plurality of KPAs; and (ii) generating, by using the set of relative weightage values, a total cut-off score to assess the UX of the digital product; categorizing the digital product in either one of pre-defined categories based upon a comparison of the total cut-off score and a UX assessment score, wherein the UX assessment score corresponds to a plurality of user interface (UI) components of the digital product; obtaining the set of delta weights based upon a set of user inputs on usage context of the digital product; identifying each of the plurality of highest delta weights from the set of delta weights, and wherein each of the identified highest delta weight corresponds to at least one of the plurality of KPAs; categorizing the digital product by computing, based upon a set of guidelines scores, a plurality of earned score values, wherein each of earned score value amongst the plurality of earned score values corresponds to at least one of a KPA amongst the plurality of KPAs, and wherein each of a guidelines score amongst the set of guidelines scores correspond to at least one component of the digital product; assessing the UX of the digital product by auto-generating, based upon the UX assessment score, a set of recommendations by a recommendations engine on one or more UX shortcomings of the digital product upon determining at least one of: (i) the UX assessment score is less than the total cut-off score; and (ii) at least one earned score value amongst a plurality of earned score values is less than the corresponding KPA cut-off score; and providing suggestions by the recommendations engine for overcoming the one or more UX shortcomings of the digital product on determining at least one earned score value amongst the plurality of earned score values to be less than the corresponding KPA cut-off score.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for quantitative assessment of a user experience (UX) of a digital product, in accordance with some embodiments of the present disclosure.

FIG. 2 is an architectural diagram depicting the components and flow of the system for the quantitative assessment of the UX of the digital product, in accordance with some embodiments of the present disclosure.

FIG. 3A through 3B is a flow diagram illustrating the steps involved in process of the quantitative assessment of the UX of the digital product, in accordance with some embodiments of the present disclosure.

DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

Systems and methods for assessing User experience (UX) of a digital product are described herein. Digital technologies are impacting day-to-day activities in a plurality of ways and digital products have become an essential part of day-to-day activities. Presently, various organizations, such as Information Technology (IT) organizations, deal with development of a plurality of digital products. Therefore, efficient development of the digital products is one of the most important keys for success of an organization. It is important for such organizations to pay attention to building, maintaining, and enhancing their capabilities in developing and upgrading the digital products and providing services through the plurality of digital products in a systematic manner in order to attend to organizational and user needs. Quantitative assessment of the UX is critical in this aspect.

The traditional systems and methods implement usability parameters as a main reference for assessing the UX for any product, however usage context information is not explicitly used as an input while assessing the UX. Moreover, analyzing the information and assessment results can only be understood and articulated by a UX expert. People who are not from UX design fields, don't have a tool for self-assessing the usability of a product (or a digital product), hence they have to rely upon the experts. These traditional frameworks do not factor in aspects like easiness to assess UX early in the development life cycle, scalability of the model to be extended to assess any digital product, guiding assessor in further decision making on issues/defects raised.

Hence, there exists a need for a technology which provides for the quantification and measurement of the UX of the digital product from all possible angles and for all components of the digital product in order to provide for an accurate quantification of the UX with an ultimate objective of optimizing the level of customer satisfaction and revenue potential of a business. Further, the technology must provide for assessing any kind of a digital product, whether with or without User Interface (UI) components and also must facilitate the assessment of the UX by non-designers (or non-experts) as well. Still further, the technology must provide for an auto-identification of changes to be made in the digital product to meet the acceptable cut-off score, if not achieved. It must facilitate the non-designers to make clear decisions to mature the usability level of the digital product and any ambiguous and subjective decision-making at non-designers level.

The term "digital product" as herein referred to in the proposed disclosure may comprise of a software enabled product that offers some form of utility to a human being. The digital touchpoint through which a human interfaces with said product or service can be on many types of platforms and devices, for example, web, mobile, auto, wearables etc.

Further, UX refers to a user's perceptions and responses that result from the use or anticipated use of a product, a system, or a service. UX of any product depends upon, for example, user's requirements, user's emotions, expectations from the software product, and context of use.

UX refers to an overall experience that user(s) have while interacting with the product, for example, through a graphical user interface (GUI). Users generally interact with a product for a variety of reasons, for example, to find content, complete tasks and achieve specific goals. Various parameters that influence this experience include usability, persuasiveness, branding, differentiation, and the capability to delight end users.

Key performance attributes (KPAs) comprise customizable metrics utilized to present the status and trends corresponding to a business or a product or anything else in an easily cognizable manner. Once the objectives are defined, the KPAs may be employed to measure progress toward the defined objectives. In general, each KPA can have a target value and an actual value. The target value represents a quantitative goal or object that is considered key or critical to the success of a business or organization. Thus, target values can be quite different for distinct businesses or products as their goals and focus is often dissimilar. For example, business can have KPAs concerning sales, net profit, and debt ratio. A product may have KPAs concerning usability, technological advancement etc. The target value can change over time but is for the most part a stable value. The actual value is the value that fluctuates often based on the actions and performance of a business. Actual values can be compared to target values to determine a business' health or progress toward the target value. Thus, the KPAs are advantageous in that they provide a clear description of organizational goals and distill vast quantities of data down to a single value that can be utilized to continuously monitor business performance and its progress toward organization benchmarks.

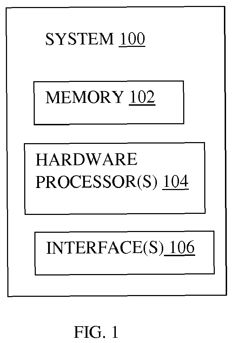

Referring now to the drawings, and more particularly to FIGS. 1 through 3B, where similar reference characters denote corresponding features consistently throughout the figures, there are shown preferred embodiments and these embodiments are described in the context of the following exemplary system and/or method.

FIG. 1 illustrates an exemplary block diagram of a system 100 for quantitative assessment of user experience (UX) of a digital product according to an embodiment of the present disclosure. In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

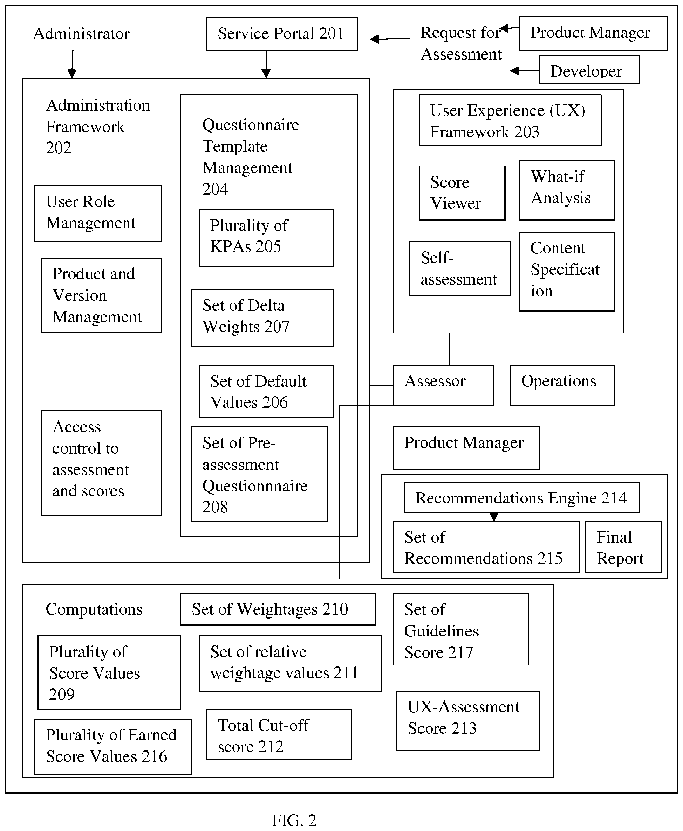

According to an embodiment of the present disclosure, referring to FIG. 2, the architecture and components of the system 100 for the quantitative assessment of the UX of the digital product may be discussed. A Service Portal 201 comprises of an Administration framework 202 and a User experience Framework 203. The Administration framework 202 further comprises of a Questionnaire Template Management 204. The user experience framework 203 facilitates, inter-alia, content specification, score viewing and self-assessment etc., while the administration framework facilitates role management, template management and product and version management.

The Questionnaire Template Management 204 comprises inter-alia, the plurality of KPAs 205, one or more default values to be assigned to each of the plurality of KPAs 205, a set of delta weights 207, and a set of pre-assessment questionnaire 208 (which facilitate the quantitative assessment of the UX of the digital product). Computations block facilitates computations of various parameters that facilitates the quantitative assessment of the UX of the digital product. A Recommendations Engine 214 facilitates, inter-alia, auto-generation of any shortcoming(s) of the digital product based upon a series of computations and comparison(s) and also provides for auto-generation of suggestions based upon the shortcoming(s).

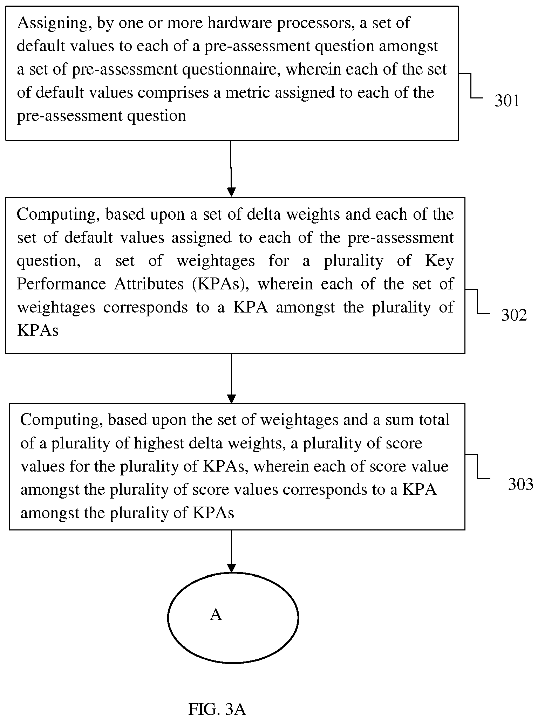

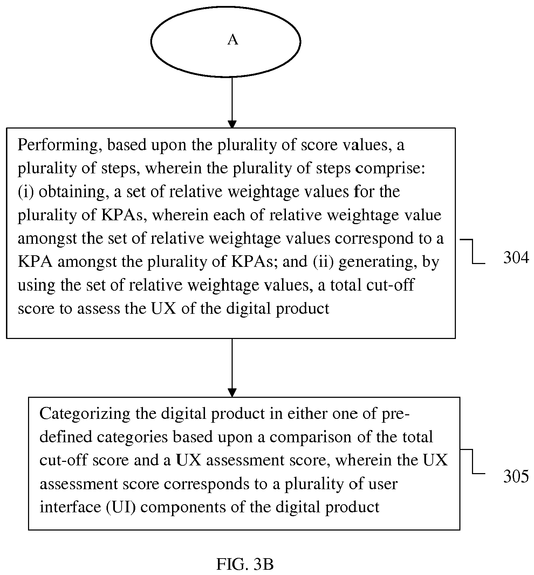

FIG. 3A through 3B, with reference to FIGS. 1 and 2, illustrates an exemplary flow diagram of a method for the quantitative assessment of the UX of the digital product according to an embodiment of the present disclosure. In an embodiment the system 100 comprises one or more data storage devices of the memory 102 operatively coupled to the one or more hardware processors 104 and is configured to store instructions for execution of steps of the method by the one or more processors 104. The steps of the method of the present disclosure will now be explained with reference to the components of the system 100 as depicted in FIG. 1 and the flow diagram. In the embodiments of the present disclosure, the hardware processors 104 when configured the instructions performs one or more methodologies described herein.

According to an embodiment of the present disclosure, in order to perform the quantitative assessment of the UX of the digital product, the system 100 may be configured to define, via the one or more hardware processors 104, a plurality of Key Performance Attributes (KPAs) 205 and map each of KPA amongst the plurality of KPAs 205 with a plurality of applications and components (or any other parameters) of the digital product. Referring to Table 1 below, the plurality of KPAs 205 defined assessing the UX for the digital product may be referred. The plurality of KPAs 205 remain unchanged while assessing the digital product (or while assessing the UX of any other product by using the proposed methodology). Further, each of the plurality of KPAs 205 correspond to one or more usability guidelines amongst a set of usability guidelines corresponding to a plurality of UI components of the digital product. Considering an example, scenario, the digital product comprises of a component "Homepage". The set of usability guidelines corresponding to the component "Homepage" may comprise "Does homepage provide all the information and links that user will need to initiate tasks in this application? and/or "Does homepage represent the brand of the application correctly - through proper use of imagery, fonts and colors as applicable?" Similarly, each component can have a corresponding set of guidelines.

Table 1

| S. No. (A) | Key Performance Attributes (KPAs) (B) |
|------------|----------------------------------------|
| 1 | Ease of use |
| 2 | Speed of use |
| 3 | Learnability |
| 4 | Consistency |
| 5 | Content |
| 6 | Accessibility |
| 7 | Flexibility |
| 8 | Aesthetics |
| 9 | Recovery from errors |
| 10 | Help |

According to an embodiment of the present disclosure, referring to Table 2 below, a set of pre-assessment questionnaire 208 may be referred, wherein the set of pre-assessment questionnaire 208 comprises a plurality of questions stipulated in Column B of Table 2. The plurality of questions are to be answered by one or more users for the quantitative assessment of the UX of the digital product. The one or more users may include a designer, technical manager(s), product mangers(s) or any other technical or non-technical person involved in usage or development, or testing of the digital product or by any other way and any means whatsoever. Further, each of question amongst the plurality of questions are mapped to the plurality of KPAs 205 mentioned in Table 1 above. The one or more users are required to answer each of the plurality of questions by selecting one option from Columns C and D of Table 2. The implementation and usage of Table 2 may now be considered and discussed in detail.

In an embodiment, referring to Table 2 again, it may be noted that at least three or more options are mapped by the one or more hardware processors 104 which are to be provided for selection purposes and from which the one or more users may select one option. In an example implementation, the question "Is the primary usage of the application to do tasks efficiently or explore information content?" can have three options, that is, "Not Applicable", "Explore information content" or "To do task efficiently". Depending upon the usage context of the digital product, the one or more users may select option "Explore information content" In Column C. Similarly, the question "What is the Primary Device used for the application?" comprises four options mapped, that is, "Not Applicable", "KIOSK", "Desktop" and "Tablet / Mobile". Again, depending upon the usage context of the digital product, the one or more users may select option "Desktop". Similarly, referring to Table 2 again, it may be noted that the one or more users are required to select one option amongst the three or four options mapped for selection. Referring to Column C of Table 2 again, the option selected for each of the question in Column B may be referred.

In an embodiment, referring to Column D of Table 2, a set of four options are mapped by the one or more hardware processors 104 which are to be provided for selection purposes and from which the one or more users may select one option. The set of four options comprise "Not Applicable", "Low", "Medium" and "High". Contrary to Column C, the set of four options in Column D remain same, that is, the one or more users may select one option as "Not Applicable" or "Low" or "Medium" or "High". In an example implementation, referring to Column D of Table 2 again, for the question "Are you depending on end user for word of mouth publicity of application?" the one or more users may select one option from the set of four options (that is selected as "Medium"). Referring to Column D of Table 2 again, based upon the usage context of the digital product, the option selected by the one or more questions for each of the plurality of questions may be referred.

According to an embodiment of the present disclosure, the significance of the set of pre-assessment questionnaire 208 may now be considered. The set of pre-assessment questionnaire 208 provides for a set of information on the usage context of the digital product through a set of user inputs to facilitate the computation of the UX of the digital product. The plurality of questions (or statements thereof) are based, inter-alia, upon various requirements, users personas, tasks, environment, and branding. The one or more users provide the set of user inputs to the plurality of questions (or statements thereof) and provide for the significance to business for each of them which essentially affects the applicability of Key Performance Attributes to the digital product. As discussed above, each of the plurality of questions is mapped with the plurality of KPAs 205 and the framework (that is the proposed disclosure) automatically derives a weightage, a score value etc. for each of the plurality of KPAs 205 and determines (or computes) the acceptable cut-off score to assess in quantitative terms, usability level(s) for the digital product. The implementation and usage of the set of pre-assessment questionnaire 208 for facilitating the quantitative assessment of the UX of the digital product through a series of computations has been discussed and elaborated with example implementations in subsequent paragraphs.

Table 2

| S. No. | Set of pre-assessment questionnaire (Product Requirements and Factors affecting applicability of KPIs) (B) | Select options applicable to your product (C) | Significance to Business (D) - to be selected as either one of Not Applicable, Low, Medium and High |
|---|---|---|---|
| 1 | Is the primary usage of the application to do tasks efficiently or explore information content? | Explore information content | High |
| 2 | Are you depending on end user for word of mouth publicity of application? | No | Medium |
| 3 | Is Internationalization expected? | No | High |
| 4 | is the Primary Device used for the application? | Desktop | High |
| 5 | Does the application expect user to do customization? | No | Low |
| 6 | For primary user role, what is the frequency of using the application to perform the primary task? | Medium (Between twice to 6 times a week) | High |
| 7 | What is the level of accessibility that your application must comply? | A | Low |
| 8 | The novice application users are expected to understand and learn the primary tasks, after... | first or Second usage of application and Exploration | High |
| 9 | Is one of your primary user persona an elderly? | No | Low |
| 10 | What is the Tech savviness level of your primary set of users? | Advance Beginner. E.g. Uses MS Office Tools or other such basic tools/apps to get work done | High |

(continued)

| S. No. | Set of pre-assessment questionnaire (Product Requirements and Factors affecting applicability of KPIs) (B) | Select options applicable to your product (C) | Significance to Business (D) - to be selected as either one of Not Applicable, Low, Medium and High |
|---|---|---|---|
| 11 | Do users have knowledge of the product domain? | No | NA |
| 12 | Is email/phone/online chat support available for the product/ application, to promptly answer any end user queries? | Yes | Low |
| 13 | Do you need the UI to consume low power? | No, there is no such requirement | High |
| 14 | Will the usage and access be restricted within Office premises? | No | Low |
| 15 | According to you, how important is the UX/Usability of this application for selling it? | Low | Low |

According to an embodiment of the present disclosure, at step 301, the one or more hardware processors 104 assign a set of default values 206 to each of a pre-assessment question amongst a set of pre-assessment questionnaire, wherein each of the set of default values 206 comprises a metric assigned to each of the pre-assessment question. In an embodiment, referring to column D of Table 2, a set of four values (or default values) are mapped by the one or more hardware processors 104 in the "significant to business" column (that is Column D of Table 2) for each of four options that the one or more users may select in Column D. The default values mapped are as below:
For the option "Not Applicable (or NA)" the default value of 0 is mapped, similarly for the options "Low", "Medium" and "High", the default values are mapped as 1, 2 and 3 respectively.

Based upon the selection made by the one or more users, the one or more hardware processors 104 select the corresponding default value mapped. In an example implementation, referring to Table 2 again, suppose for the question "Is the primary usage of the application to do tasks efficiently or explore information content?" the one or more users select the option in the column D as "High". The one or more hardware processors 104 select the mapped default value as 3. Similarly, referring to Table 2 again, suppose for the question "Does the application expect user to do customization?" the user selects the option in the column D as "NA", the default value is selected as 0.

In an embodiment, the step of assigning the default value is preceded by obtaining, based upon the set of user inputs , the set of delta weights 207 by the one or more hardware processors 104, wherein each of delta weight amongst the set of delta weights 207 correspond to each of the plurality of KPAs 205. In an embodiment, initially, referring to Column D of Table 3, each KPA amongst the plurality of KPAs 205 may be defined for each option amongst the "select options applicable to your product" in Column C. The step may now be discussed in details through Table 3 below.

TABLE 3

| S.No. (A) | Product Requirements and Factors affecting applicab ility of KPAs (B) | Select Options applicable to your Product (C) | KPAs correspondin g to each of the option in Column C (D) | Default value assigne d to each of the KPAs based upon the option selected in the column (D) of Table 2 (E) | Delta weight assigne d to each of the plurality of the KPAs (F) | Weightag e assigned to each of the plurality of the KPAs - obtained as *EXF* (G) |
|---|---|---|---|---|---|---|
| 1 | Is the primary usage of the application to do tasks efficiently or explore information content? | To do task efficiently Explore information content | Ease of use | 3 | 2 | 6 |
| | | | Speed of use | | 3 | 9 |
| | | | Learnability | | 0 | 0 |
| | | | Consistency | | 3 | 9 |
| | | | Content | | 0 | 0 |
| | | | Accessibility | | 0 | 0 |
| | | | Flexibility | | 2 | 6 |
| | | | Aesthetics | | 1 | 3 |
| | | | Recovery from errors | | 3 | 9 |
| | | | Help | | 0 | 0 |
| | | | Ease of use | 0 | 1 | 0 |
| | | | Speed of use | | 0 | 0 |
| | | | Learnability | | 1 | 0 |
| | | | Consistency | | 0 | 0 |
| | | | Content | | 1 | 0 |
| | | | Accessibility | | 0 | 0 |
| | | | Flexibility | | 0 | 0 |
| | | | Aesthetics | | 0 | 0 |
| | | | Recovery from errors | | 0 | 0 |
| | | | Help | | 0 | 0 |

(continued)

| S.No. (A) | Product Requirements and Factors affecting applicab ility of KPAs (B) | Select Options applicable to your Product (C) | KPAs correspondin g to each of the option in Column C (D) | Default value assigne d to each of the KPAs based upon the option selected in the column (D) of Table 2 (E) | Delta weight assigne d to each of the plurality of the KPAs (F) | Weightag e assigned to each of the plurality of the KPAs - obtained as *EXF* (G) |
|---|---|---|---|---|---|---|
| 2 | Are you depending on end user for word of mouth publicity of application? | Yes | Ease of use | 2 | 2 | 4 |
| | | | Speed of use | | 1 | 2 |
| | | | Learnability | | 3 | 6 |
| | | | Consistency | | 1 | 2 |
| | | | Content | | 3 | 6 |
| | | | Accessibility | | 0 | 0 |
| | | | Flexibility | | 1 | 2 |
| | | | Aesthetics | | 3 | 6 |
| | | | Reco very from errors | | 2 | 4 |
| | | | Help | | 3 | 6 |
| | | No | Ease of use | 0 | 0 | 0 |
| | | | Speed of use | | 0 | 0 |
| | | | Learnability | | 0 | 0 |
| | | | Consistency | | 0 | 0 |
| | | | Content | | 0 | 0 |
| | | | Accessibility | | 0 | 0 |
| | | | Flexibility | | 0 | 0 |
| | | | Aesthetics | | 0 | 0 |
| | | | Recovery from errors | | 0 | 0 |
| | | | Help | | 0 | 0 |

In an embodiment, referring to column E of Table 3 above, a set of four values (pre-fixed) as 0, 1, 2 and 3 are initially defined, and are then mapped by the one or more hardware processors 104 as a delta weight for each of the four options that the user may select for each of the KPA, wherein each of the KPA is mapped with only one value amongst the set of four values, and wherein 3 denotes highest delta weight and 0 is lowest delta weight.

In an example implementation, referring of Table 3 again, suppose for the product requirement (column B) from amongst the factors affecting applicability of the KPAs, the delta weight is to be assigned for "Is the primary usage of the application to do tasks efficiently or explore information content?". Referring to Column C, the applicable options are defined as "To do task efficiently" or "Explore information content". The one or more users select the option as "To do task efficiently". The delta weight may then be mapped by the one or more hardware processors 104 for each of the KPA corresponding to the factor "To do task efficiently" as below:

Ease of Use = 2, Speed of Use = 3, Learnability = 0, Consistency=2, Content=2, Accessibility=0, Flexibility=2, Aesthetics=1, Recovery from errors=3 and Help=0

Similarly, for each of the KPA corresponding to the factor "Explore information content" the delta weight may be mapped as:

Ease of Use = 1, Speed of Use = 0, Learnability = 1, Consistency=0, Content=1, Accessibility=0, Flexibility=0, Aesthetics-0, Recovery from errors=0 and Help=0

Similarly referring to Column F of Table 3, the delta weight assigned to each of the plurality of the KPAs may be referred.

According to an embodiment of the present disclosure, at step 302, the one or more hardware processors 104 compute, based upon the set of delta weights 207 and each of the set of default values 206 assigned to each of the pre-assessment question, a set of weightages 210, wherein each of weightage amongst the set of weightages 210 corresponds to a KPA amongst the plurality of KPAs 205. The proposed disclosure facilitates computing of a weightage for each question (shown in column B of Table 3 above) based upon the assigned set of default values 206 and the delta weight obtained for each of the plurality of KPAs 205, wherein the plurality of KPAs 205 are defined for all the questions (that is, the product requirements and the factors affecting applicability of KPIs) in column B. Referring to Column G of Table 3 above, each weightage amongst the set of weightages 210 may be obtained as:

*the set of default values assigned to each of the pre*
*- asessment question X*
*delta weight obtained for each KPA*

wherein, each of the set of default values 206 assigned to each the pre-assessment question by the one or more hardware processors 104 is shown by in column E of the Table 3.

Referring to Table 2 again, suppose the one or more users has selected the option in Column D as "high" for the question "Is the primary usage of the application to do tasks efficiently or explore information content?" in Column B and the corresponding option "To do task efficiently" in column C. It may be recalled that in the step 301, the set of four values are mapped by the one or more hardware processors 104 in the "significant to business" column (that is, column D) for each of the four options that the user may select, wherein each of the option (from four options that the one or more users may select) is mapped with one value amongst the set of four values and the option "high" is mapped with default value 3.

The one or more hardware processors 104 perform a mapping of the default value in column E with the corresponding options "Is the primary usage of the application to do tasks efficiently or explore information content?" in column B and "To do task efficiently" in column C, as selected by the one or more users. It may be noted that the default value 3 is then mapped to each of the KPA in column D corresponding to the options "Is the primary usage of the application to do tasks efficiently or explore information content?" and "To do task efficiently" in columns B and C respectively. For the other option(s) defined in column C corresponding to the question(s) in Column B, the default value will be mapped as "0" by the one or more hardware processors 104. In an example scenario, referring to Table 3 again, suppose for the question "Are you depending on end user for word of mouth publicity of application?" in column B, the one or more users has selected the option as "Yes" in column C. Referring to Table 2 again, the corresponding option selected in column D is "Medium", wherein the default value of "2" is mapped in the step 301 earlier with the option "Medium". The one or more hardware processors 104 map the value as "2" for each of the KPA in column D of Table 3. Referring to Table 3 again, for the other option "No" in column C, the default value will be mapped as "0" since the one or more users has selected the option as "Yes" and not as "No". Similarly, a default value (that is, the highest default value) is mapped with each of the plurality of KPAs 205 corresponding to "Product Requirements and Factors affecting applicability of KPIs" (defined in Column B of Tables 2 and 3).

In an example implementation for the step 302, in Table 3, suppose for the question "What is the Primary Device used for the application?" (in Column B) the corresponding factor is selected as "Desktop" (in Column C). Referring to Table 2 again, in the Column D (that is, option "Significance to Business"), the one or more users has earlier selected the option as "High". The one or more hardware processors 104 map the default value of "3"with each of the KPA defined for the question "What is the Primary Device used for the application?" (in Column B) and the corresponding factor is selected as "Desktop" (in Column C). Based upon the mapping performed, the one or more hardware processors 104 compute weightage assigned to each of the plurality of the KPAs as:

*default value mapped to each of the KPA corresponding to each of the pre*

*- assessment question*
*× defult weight obtained for each of the KPA*

Thus, referring to Table 3 again, the corresponding weightage for each of the KPA may be obtained (referred to in Column G of Table 3) as shown in an example Table below:

Example Table

| KPA | Default value | Delta value | Weightage |
|---|---|---|---|
| Ease of use | 3 | 1 | 1 X 3 = 3 |
| Speed of use | | 1 | 1 X 3 = 3 |
| Learnability | | 0 | 3 X 0 = 0 |

Similarly, the set of weightages 210 may be obtained for each of the KPA defined in Table 1. As discussed above, in the example implementation under consideration, since the user has selected the option as "Desktop", the default value (based upon the option "High" selected earlier) will be mapped as "3" for each of the KPA defined for the option "Desktop". For the options "Mobile / Tablet" and "KIOSK" (not selected by the user", the default value will be mapped as "0" for each of the KPA (defined for the option "Desktop". For the options "Mobile / Tablet" and "KIOSK").

According to an embodiment of the present disclosure, at step 303, the one or more hardware processors 104 compute, based upon the set of weightages 210 and a sum total of a plurality of highest delta weights, a plurality of score values 209 for the plurality of KPAs 205, wherein each of score value from the plurality of score values 209 corresponds to a KPA amongst the plurality of KPAs 205. The process of computing the plurality of score values 209 may now be considered in detail by referring to Table 4 below.

Table 4

| S. No. (A) | Key Performance Attributes (KPAs) (B) | Sum of the weightages corresponding to each of the KPA in Column B (C) | Score value (obtained as sum of the plurality of highest delta weights) corresponding to each of the KPA in Column B (D) | Relative weightage value corresponding to each of the KPA in Column B (E) |
|---|---|---|---|---|
| 1 | Ease of use | 36 | 46.15384615 | 10.7473429 |
| 2 | Speed of use | 14 | 38.88888889 | 9.055631552 |
| 3 | Learnability | 26 | 34.88888887 | 8.072448671 |
| 4 | Consistency | 29 | 60.41666667 | 14.0685704 |
| 5 | Content | 19 | 35.18518519 | 8.193190424 |
| 6 | Accessibility | 6 | 33.33333333 | 7.761969876 |
| 7 | Flexibility | 14 | 46.66666667 | 10.86675783 |
| 8 | Aesthetics | 16 | 48.48484848 | 11.290138 |
| 9 | Recovery from errors | 26 | 54.16666667 | 12.61320105 |
| 10 | Help | 17 | 31.48148148 | 7.330749327 |
| | | | Sum = 429.6 | |

In an embodiment, initially, referring to Column C of Table 4, a sum of the weightages corresponding to each of the KPA in Column B may be obtained. In an example scenario, for the KPA" Ease of Use", the sum of all the weightages computed for the KPA "Ease of Use" may be obtained. Thus, the weightages assigned to the KPA "Ease of Use" (referring to Table 4 Column G) are (6, 0), (4, 0), (3, 0), (3, 0, 0), (0, 0), (0, 6, 0), (0, 0, 0), (6, 0), (2, 0,), (0, 6, 0), (0, 0), (0, 0), (0, 0), (0, 0) and (0, 0, 0, 0), wherein first set of weightage (6, 0) for the KPA "Ease of Use" correspond to question "Is the primary usage of the application to do tasks efficiently or explore information content?", second set of weightage (4, 0) for the KPA "Ease of Use" correspond to question "Are you depending on end user for word of mouth publicity of application?" and so on.

In an embodiment, a sum of highest delta weights corresponding to each of the KPA in Column B may be obtained. Further, the sum of the highest delta weights corresponding to each of the KPA gets multiplied with delta weight with maximum significance amongst the set of delta weights 207. Each of the plurality of highest delta weights is identified from the set of delta weights 207, and wherein each of the identified highest delta weight corresponds to at least one of the plurality of KPAs 205. Since for different digital products, the set of delta weights 207 obtained may be different as per depending upon tasks performed by the one or more users and the usage of the product, the highest delta weight is identified and considered for computing the plurality of score values 209.

In an example scenario, for the KPA" Ease of Use", highest delta weights are identified as 2, 2, 1, 3, 2, 3, 0, 2, 2, 3, 2, 2, 0, 0, and 2. The sum of the identified highest delta weight is 26. The delta weight with maximum significance is 3. Hence, for the KPA "Ease of Use", highest delta weight may be obtained as 26 $\times$ 3 = 78. Similarly, for all the KPAs, highest delta weight may be obtained, that is, the plurality of highest delta weights maybe obtained. In an example scenario, for the KPA "Speed of Use" and "Learnability", the highest delta weights may be obtained as 36, 75 respectively (computation not shown).

Based upon the set of weightages 210 and the plurality of highest delta weights, the plurality of score values 209 may be computed. Thus, the score value corresponding to each of the KPA may be computed as:

$$\frac{Sum\ of\ all\ weightages\ obtained\ for\ the\ KPA}{Sum\ of\ highest\ delta\ weights\ for\ the\ KPA} \times 100$$

In an example implementation for the step 303, referring to Table 4 again, the sum of the weightages assigned to the KPA "Ease of Use" is 36 and the sum of the plurality of highest delta weights computed for the KPA "Ease of Use" is 78. Referring to Column D of Table 4 again, the score value for the KPA may be obtained as:

$$36 \div 78 \times 100 = 46.15384615$$

Similarly, for all the remaining KPAs, the score value may be computed (collectively called as the plurality of score values 209). Referring Column D of Table 4 above, the plurality of score values 209 computed may be referred, wherein each of the score value computed for the respective KPA may be referred.

According to an embodiment of the present disclosure, at step 304(i), the one or more hardware processors 104 determine, based upon the plurality of score values 209, a set of relative weightage values 211, wherein each of relative weightage value amongst the set of relative weightage values 211 correspond to a KPA amongst the plurality of KPAs 205. The process of computing the set of relative weightage values 211 may now be considered in detail referring to Table 4 above.

In an embodiment, an aggregate score value may be computed as a sum total of the plurality of score values 209. The sum total of the plurality of score values 209 (in Column D of Table 4) may be obtained as approximately 429.6. Based upon the sum total of the plurality of score values 209 and the set of score value corresponding to the KPA in question, each of the relative weightage value may be determined as:

$$\frac{Score\ value\ computed\ for\ the\ KPA}{Sum\ total\ of\ the\ set\ of\ score\ values\ computed\ for\ all\ KPAs\ (or\ Aggregate\ score\ value)} \times 100$$

In an example implementation for the step 304(i), referring to Table 4 again, the score value for the KPA "Ease of Use" is 46.15384615, while the total of the plurality of score values 209 is approximately 429.6. Thus, for the KPA "Ease of Use", the relative weightage value may be determined as:

$$\frac{46.15384615}{429.6} \times 100 = 10.74$$

Similarly, for all the remaining KPAs, the relative weightage value may be determined. Referring Column E of Table 4 above, the set of the relative weightage values determined may be referred, wherein each of the relative weightage value determined for the corresponding KPA may further be referred. The set of relative weightage values 211 signify the importance each of the plurality of KPAs 205 in context of the digital product. In an example scenario, referring to column E of Table 4 again, the KPAs "Consistency" and "Recovery from errors" have higher relative weightage values of 14.0685704 and 12.61320105 respectively. Thus, the KPAs "Consistency" and "Recovery from errors" are to given higher importance.

In another example scenario for any other digital product (or product) like a design portfolio website or an e-commerce website, the KPA "Aesthetics" may have a highest relative weightage value (than the other KPAs) as an e-commerce website may give a highest importance to web pages designs to target mass audience. Similarly, for a database management tool, the KPA "Aesthetics" may least relative weightage value and the KPA "Recovery from errors" have a highest weightage value.

According to an embodiment of the present disclosure, at step 304(ii), the one or more hardware processors 104 generate based upon the plurality of score values 209 and the set of the relative weightage values, a total cut-off score 212 to assess the UX of the digital product. The process of generating the total cut-off score 212 may now be considered in detail.

In an embodiment, the generation of the total cut-off score 212 to assess the UX of the digital product is preceded by computing a cut-off score corresponding to each of the KPA based upon a pre-defined threshold value. The pre-defined threshold value may considered as a minimum cut-off score which the digital product may be required to achieve to ensure user satisfaction for the digital product. Further, the pre-defined threshold value or the minimum cut-off score may be fixed for each of the KPA as well for determining the overall user satisfaction based upon the total cut-off score 212.

In an embodiment, the pre-defined threshold value to assess the UX of the digital product may be initially defined as 50 and a maximum threshold value as 100 (in the scale of 1 to 100), wherein the pre-defined threshold value of 50 is the minimum cut-off score (as discussed above) and maximum threshold value 100 comprises maximum score.

The cut-off score corresponding to each of the KPA may be computed as:

Pre - defined threshold value (or minimum cut - off score)

*+ Score value computed for the KPA*

$\times$ *Maximum threshold value* - Pre

- defined threshold value (or minimum cut - off score)

In an example scenario, for the KPA "Ease of Use", the cut-off score may be computed (using the above formula) as:

$$50 + (46.15 \div 100) \times (100 - 50) = 73.07692308$$

Similarly, the cut-off score corresponding to each may be computed. Referring to Table 5 below, the cut-off score computed for each KPA may be referred.

Table 5

| S. No. (A) | Key Performance Attributes (KPAs) (B) | Cut-off score corresponding to each of the KPA in Column B (C) |
|---|---|---|
| 1 | Ease of use | 73.07692308 |
| 2 | Speed of use | 69.44444444 |
| 3 | Learnability | 67.33333333 |
| 4 | Consistency | 80.20833333 |
| 5 | Content | 67.59259259 |
| 6 | Accessibility | 66.66666667 |
| 7 | Flexibility | 73.33333333 |
| 8 | Aesthetics | 72.24242424 |
| 9 | Recovery from errors | 77.08333333 |
| 10 | Help | 65.74074074 |

According to an embodiment the present disclosure, the total cut-off score 212 to assess the UX of the digital product may be generated using the cut-off score corresponding to each of the KPA as:

$$\frac{Sum\ total\ of\ (the\ cut-off\ score\ of\ the\ KPA \times the\ corresponding\ relative\ weight\ value\ of\ the\ KPA)}{Sum\ total\ of\ the\ set\ of\ relative\ weightage\ values)}$$

The total cut-off score 212 may thus be generated as below:

Suppose, for the KPA "Ease of Use", referring to Table 5, the cut-off score has been computed as 73.07692308 and the corresponding relative weightage value, referring to Table 4 is 10.7473429. The product may be obtained as 73,07692308 × 10.7473429 = 785.3. Similarly, for all the KPAs, the product of the cut-off score and the corresponding relative weightage value may be obtained as 628.4, 543.35, 1127.6, 552.8, 517.2, 791.9, 815.5, 971.2 and 481.5, wherein the value 628.4 corresponds to the KPA "Speed of use", the value 543.35 corresponds to the KPA "Learnability" and so on.

The Sum total of the product of the cut-off scores for all the KPAs and the corresponding relative weightage values may thus be obtained as (785.3 + 628.4 + 543.35 + 1127.6 + 552.8 + 517.2 + 791.9 + 815.5 + 971.2 + 481.5 = 7276.6.

Now, the sum total of the set of relative weight values may be obtained as 100 (by approximating the relative weightage value corresponding to each of the KPA, for example the relative weightage value for the KPA "Ease of Use" may be approximated to 11 from 10.74, and the relative weightage value for the KPA "Speed of Use" may be approximated to 9 and so on).

The total cut-off score 212 may thus be computed as 7276.6 ÷ 100 = 72.7.

According to an embodiment of the present disclosure, the one or more hardware processors 104 compute a UX assessment score 213 perform the quantitative assessment of the UX of the digital product. In an embodiment, the UX Assessment score 213 is obtained as a sum total of a set of guidelines scores 217. Further, each guidelines score amongst the set of guidelines scores 217 correspond to at least one of the plurality of KPAs 205. The plurality of components may comprise inter-alia, of a login page, a grid, a homepage and various other UI components. As the digital product comprises of the plurality of components, a UX assessment of each component amongst the plurality of components is necessary to perform the quantitative assessment of the UX of the digital product. The process of computing the UX Assessment score 213 based upon the set of guidelines scores 217 may now be discussed in detail.

Table 6

| UI component (A) | Guidelines (B) | Frequency of occurrence - 0: Never (0 - 10%), 1: Rarely (10 - 40%), 2: Sometimes (40 - 50%), 3: Mostly (60-80%), 4: Always (80-100%) - to be selected by user(s) (C) |
|---|---|---|
| Login Page | Are the fields for entering User ID and password clearly labeled and prominently visible on the page? | 0 |
| | Is there a 'Forgot Password' and 'Forgot Username' link for users to seek assistance if user is unable to remember the user ID or Password or both? | 1 |
| | If user ID or password is incorrect, does the application clearly indicate that the User ID and password do not match? | 4 |
| | Does the login page indicate the name of application with appropriate logo and brand colors? | 0 |
| | Clicking on 'Forgot password' link should result into either (i) prompting secret question (ii) Contacting the administrator (iii) entering email id or any other feature configuration specified in the requirements | 2 |
| | Tab index is maintained in following order: Username, Password, Remember me' checkbox - If this feature is specified in requirements, Sign In' button, Forgot Password' link and Click here for legal notice' link - If this feature is specified in requirements | 3 |
| | Selecting 'Remember me' option results into direct login, the next time user tries it | 2 |
| | Do new users have a provision to register (online or offline) and does the login page help users to know the process for onboarding a new user? | 3 |
| Guidelines score | | 15 |

In an embodiment, referring to Column A of Table 6, a component from the plurality of components may comprise of a "Login Page". Similarly, referring to Column B, it may be noted that a set of guidelines have been provided corresponding to the component "Login Page". In an embodiment, the one or more users may select one option in Column C amongst a set of five options provided. The set of five options is mapped with each of the guideline amongst the set of guidelines, and further each component amongst the plurality of components is mapped with some other set of guidelines. The set of five options comprise 0, 1, 2, 3 and 4 which are mapped by the one or more hardware processors 104 to "never" (0% to 10%), "rarely" (10% to 40%), "sometimes" (40% to 50%), "mostly" (60% to 80%) and "always" (80% to 100%) respectively.

It may be noted that the set of five options remain same for each of guideline corresponding to each of the component amongst the plurality of components of the digital product. The set of five options, the set of guidelines and the plurality of components have been defined in the Table 6 based upon various comprising, inter-alia, of the usage of the digital product and the business requirements. For example implementation and explanation purposes, only one component (that is, the login page) has been shown along with the corresponding guidelines and the options selected by the one or more users.

In an example scenario, referring to Table 6 again, suppose for a guideline "If user ID or password is incorrect, does the application clearly indicate that the User ID and password do not match?" the one or more users selects the option as "4" as an application (of the digital product) clearly indicate that the User ID and password do not match?, and hence "4" or "always" has been selected. Similarly, the one or more users may select all other options in Column C based upon their experience (that is, the UX) of each of the component amongst the plurality if components, wherein each of the component may comprise of a different set of guidelines in Column B (as explained in the preceding paragraph). For example, for a component "Homepage", the guidelines may comprise of "If there is any personalized content e.g. worklists, dashboard etc. then does homepage provide snapshot of this content?" and "Does homepage provide all the information and links that user will need to initiate tasks in this application?". The one or more users may then select the any one option amongst the set of five options (as in the case of the component "Login Page"). It may be noted that while the set of guidelines may vary and change while assessing any other product (for example, while assessing a digital watch, a component navigation may be added, wherein the component navigation may have another set of guidelines), the plurality of KPAs 205 remain unchanged.

In an embodiment, the one or more hardware processors 104 may then generate the guidelines score, wherein the guidelines score is generated by taking a sum total of each of the option (amongst the set of five options) selected by the one or more users in Column C. In an example scenario, referring to Table 6 again, the guidelines score for the component "Login Page" may be obtained as 0+1+4+0+2+3+2+3=15. Further, the guidelines score may be obtained for each of the KPA (amongst the plurality of KPAs 205 defined), wherein the plurality of KPAs 205 correspond to each of the component amongst the plurality of components (of the digital product).

Suppose, the guidelines score of 13 was generated for the KPA "Ease of Use". In the same manner the one or more hardware processors 104 may generate the guidelines score of each of the remaining plurality of KPAs 205 for the component "Login Page". Similarly, the guidelines score may be generated for the plurality of KPAs 205 defined for each component amongst the plurality of components. Each of the guidelines score (amongst the set of guidelines scores 217) correspond to at least one of the plurality of KPAs 205, and the plurality of KPAs 205 are defined for the plurality of components

In an embodiment, based upon the set of guidelines scores 217, the one or more hardware processors 104 compute a plurality of earned score values 216 by deriving a sum total of the set of guidelines scores 217 generated for the plurality of components, and wherein each of earned score value amongst the plurality of earned score values 216 correspond to at least one of the KPA. In an example scenario, suppose the set of guidelines scores 217 for the plurality of components are generated as 25, 5, 10, 5, 10, 25, 5, 10, 5, wherein the guidelines score of 25 is generated for the component "Login Page", the guidelines score of 5 is generated for the component "Grid" and the guidelines score of 10 is generated for the component "Wizard" and so on. An earned score value for the KPA "Ease of Use" may be computed as 25+5+10+5+10+25+5+10+5=100. Similarly, earned score values may be computed for each of the plurality KPAs thereby computing the plurality of earned score values 216, and each of earned score value amongst the plurality of earned score values 216 correspond to at least one of the KPA amongst the plurality of KPAs 205.

According to an embodiment of the present disclosure, the one or more hardware processors 104 may then compute the UX Assessment score 213 based upon the plurality of earned score values 216, wherein the UX Assessment score 213 is computed by obtaining a sum total of the plurality of earned score values 216 divided by the number of KPAs for which the earned score value has been computed. In an example implementation, referring to Table 7 below, the plurality of earned score values 216 computed have been stipulated. The sum total of the plurality of earned score values 216 may be obtained as 100 + 100 + 100 + 100 + 100 + 100 + 100 = 700. As mentioned above, the UX Assessment score 213 may be obtained as:

$$\frac{Sum\ total\ of\ the\ plurality\ of\ earned\ score\ values}{Number\ of\ KPAs\ for\ which\ the\ earned\ score\ values\ have\ been\ computed}$$

$$\frac{700}{7} = 100$$

Thus, the UX Assessment score 213 may be obtained as:

It may be noted that the KPA for which the earned score value is not computed, is not considered while computing the UX Assessment score 213. In an example implementation, referring to Table 7 again, it may be noted that there is no earned score value for the KPAs Speed of use, Consistency and Flexibility. Hence, the number of KPAs for which the earned score value has been computed will be taken as 7 (and not 10) for computing the UX Assessment score 213.

According to an embodiment of the present disclosure, at step 305, the one or more hardware processors 104 categorize the digital product in either one of pre-defined categories based upon a comparison of the total cut-off score 212 and the UX Assessment score 213. The pre-defined categories comprise "pass" or "fail" and the digital product is finally categorized in either of the "pass" of "fail" category. The process of categorizing the digital product may be explain by referring to Table 7 below.

Table 7

| Key Performance Attributes (KPAs) (B) | Cut-off score corresponding to each of the KPA in Column B (C) | Earned score values (D) |
|---|---|---|
| Ease of use | 73.07692308 | 100 |
| Speed of use | 69.44444444 | Not applicable |
| Learnability | 67.33333333 | 100 |
| Consistency | 80.20833333 | Not applicable |
| Content | 67.59259259 | 100 |
| Accessibility | 66.66666667 | 100 |
| Flexibility | 73.33333333 | Not applicable |
| Aesthetics | 72.24242424 | 100 |
| Recovery from errors | 77.08333333 | 100 |
| Help | 65.74074074 | 100 |
| | **TOTAL CUT-OFF SCORE = 71.57** (average of Cut-off score as explained above) | **UX ASSESSMENT SCORE=100** (average of earned score values as explain above) |

In an embodiment, as discussed in the preceding paragraphs, the total cut-off score 212 was generated as 71.57 and the UX Assessment score 213 was computed 100. The one or more hardware processors 104 perform a comparison of the total cut-off score 212 the UX Assessment score 213 categorize the digital product. In an example scenario, referring to Table 7 again, it may be noted that the UX Assessment score 213 is greater than the total cut-off score 212 (the total cut-off score being 71.57), hence the digital product is categorized as "pass". However, if the UX Assessment score 213 computed is lesser than the total cut-off score 212, the digital product is categorized as "fail". In another example scenario, suppose the total cut-off score 212 was generated as 71.57 and the UX Assessment score 213 was computed 45, the digital product is categorized as "fail".

According to an embodiment of the present disclosure, the step of assessing the UX of the digital product comprises auto-generating, based upon the UX Assessment score 213, a set of recommendations 215 one or more UX shortcomings of the digital product by the recommendations engine 214, upon determining that the UX Assessment score 213 is lesser than the total cut-off score 212. Taking above example again, suppose the total cut-off score 212 was generated as 71.57 and the UX Assessment score 213 was computed 45 and the digital product is categorized as "fail", the one or more hardware processors 104 may auto-generate the set of recommendations 215 as "It is observed that some of the web-links were present randomly on the application" and "It is observed that the footer though available at a specific space is not consistent in all the pages. Ensure it is consistently placed at the end of the page". Thus, the auto-generated set of recommendations 215 correspond to one or more usability guidelines of the digital product.

According to an embodiment of the present disclosure, the digital product is still categorized as "fail" even if the UX Assessment score 213 computed is greater than the total cut-off score 212, if the one or more hardware processors 104 determine that at least one earned score value amongst the plurality of earned score values 216 to be less than the corresponding KPA cut-off score. In example scenario, referring to Table 8 below, suppose the earned score value for the KPA "Learnability" is 42, which is less than the corresponding cut-off score, while the UX Assessment score 213 computed is greater than the total cut-off score 212, the digital product is categorized as "fail" as the digital product fails in the KPA "learnability".

Table 8

| Key Performance Attributes (KPAs) (B) | Cut-off score corresponding to each of the KPA in Column B (C) | Earned score values (D) |
|---|---|---|
| Ease of use | 73.07692308 | 100 |
| Speed of use | 69.44444444 | Not applicable |
| **Learnability** | **67.33333333** | **42** |
| Consistency | 80.20833333 | Not applicable |
| Content | 67.59259259 | 100 |
| Accessibility | 66.66666667 | 100 |
| Flexibility | 73.33333333 | Not applicable |
| Aesthetics | 72.24242424 | 100 |
| Recovery from errors | 77.08333333 | 100 |
| Help | 65.74074074 | 100 |
| | TOTAL CUT-OFF SCORE = 71.57 (average of Cut-off score as explained above) | UX ASSESSMENT SCORE=91.71 (average of earned score values as explain above) |

In an embodiment, the step of auto-generating the set of recommendations 215 comprises providing suggestions for overcoming the one or more UX shortcomings of the digital product on determining at least one earned score value amongst the plurality of earned score values 216 to be less than the corresponding KPA cut-off score. In an example implementation, upon determining that the digital product fails in the KPA "learnability", the one or more hardware processors 104, via the recommendations engine 214, auto-generate the suggestions for overcoming the one or more UX shortcomings of the digital product as referred to in Table 9 below.

Table 9

| Name of the component | Frequency of occurrence | Recommendation frequency | Suggestions |
|---|---|---|---|
| HEADER - Is there a clear and consistent section for utility links such as about, help etc. | Sometimes | Always | It is observed that some of these links were present randomly on the application. Ensure that the Utility links like About Us, Help, Contact us have a demarcated or a specific place on the application, which is easy for the user to locate |
| FOOTER - Does footer exist and clearly and consistently denote end of page? | Sometimes | Always | It is observed that the footer though available at a specific space is not consistent in all the pages. Ensure it is consistently placed at the end of the page |
| NAVIGATION - Is the location of primary navigation consistent across the application? | Sometimes | Always | It is observed that the in some pages the primary navigation links were not placed on left side, ensure that the placement of the navigation is consistent across the pages |

Referring to Table 9 above, it may be noted that for the one or more component "HEADER", "NAVIGATION" etc., the frequency of occurrence corresponding to the set of guidelines "Is there a clear and consistent section for utility links such as about, help etc." and "Is the location of primary navigation consistent across the application?" was selected as "Sometimes" instead of "Always" and due to which the one or more hardware processors 104 mapped the value as "2" instead of "4". This further resulted in a lower earned score value for the KPA "Learnability" and thus the digital product was categorized as "fail" (even though the UX Assessment score 213 was greater than the total cut-off score 212.

Further, referring to Column D of Table 9, it may be noted that the recommendations engine 214 auto-generated the set of recommendations 215 as "Ensure that the Utility links like About Us, Help, Contact us have a demarcated or a specific place on the application, which is easy for the user to locate" and "Ensure that the placement of the navigation is consistent across the pages" etc. for overcoming the one or more UX shortcomings of the digital product (or the one or more components of the digital product).

According to an embodiment of the present disclosure, as compared to the traditional systems and methods, the proposed disclosure facilitates implementing the proposed methodology to future devices or technologies that that humans will interact with or the evolution(s) in modes of interactions itself (for example, gestures based interaction). Thus, the proposed methodology is scalable for assessing the UX of any digital product (or any product) on any of the current or future devices. This is because the framework is based on Key Performance Attributes like Ease of Use, Speed of Use, learnability etc. which are relevant for any current or future device(s).

In an example scenario, if the user has to conduct assessment of the UX for a wearable device like smart watches, the user only needs to add or change some of the existing set of guidelines in Table 6. For example, navigation designed in smart watches may be slightly different from the way navigation is designed on mobile devices or desktops / laptops. Hence, a possible change for smart watches may comprise adding or changing the set of guidelines for navigation component in Table 6. Based upon the addition of changes, the set of guidelines scores 217 may further be generated, the plurality of earned score values 216 may be computed and the UX Assessment score 213 may be computed to categorize any other digital product as "pass" or "fail".

According to an embodiment of the present disclosure, some additional advantages of the proposed disclosure may also be considered. The proposed methodology assesses the UX for the digital product (or any other software product), by implementing the usage context information as an input (while assessing the UX). The plurality of KPAs 205 are defined and mapped in entirety with the digital product for assessing the UX, that is, for all parameters and the plurality of components of the digital product.

The proposed disclosure further provides for computing the UX Assessment score 213 (to categorize the digital product as "pass" or "fail") by assessing each of the plurality of KPAs 205 corresponding to each of the plurality of components of the digital product and other relevant parameters. Hence, even if one of the KPA fails, the proposed disclosure categorizes the digital product as failed. It further cites reason(s) for failure and provides for the auto-generation of the set of recommendations 215 based upon which a corrective action may be taken. Finally, the proposed disclosure may be implemented by non-designers (or non-experts) as well to assess the UX of their digital product(s).

In an embodiment, the memory 102 can be configured to store any data that is associated with the quantitative assessment of the UX of the digital product. In an embodiment, information or data pertaining to the default values, set of delta weights 207, the set of weightages 210, the plurality of score values 209, the total cut-off score 212 and the UX Assessment score 213 etc. gets stored in the memory 102. Further, all information (inputs, outputs and so on) pertaining to the quantitative assessment of the UX of the digital product may also be stored in the database, as history data, for reference purpose.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be example, hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1.  A method of quantitative assessment of a user experience (UX) of a digital product, the method comprising a processor implemented steps of:

    assigning, by one or more hardware processors, a set of default values to each of a pre-assessment question amongst a set of pre-assessment questionnaire, wherein each of the set of default values comprises a metric assigned to each of the pre-assessment question (301);
    computing, based upon a set of delta weights and each of the set of default values assigned to each of the pre-assessment question, a set of weightages for a plurality of Key Performance Attributes (KPAs), wherein each of the set of weightages corresponds to a KPA amongst the plurality of KPAs (302);
    computing, based upon the set of weightages and a sum total of a plurality of highest delta weights, a plurality of score values for the plurality of KPAs, wherein each of score value amongst the plurality of score values corresponds to a KPA amongst the plurality of KPAs (303);
    performing, based upon the plurality of score values, a plurality of steps, wherein the plurality of steps comprise (304):

    (i) obtaining, a set of relative weightage values for the plurality of KPAs, wherein each of relative weightage value amongst the set of relative weightage values correspond to a KPA amongst the plurality of KPAs (304(i)); and
    (ii) generating, by using the set of relative weightage values, a total cut-off score to assess the UX of the digital product (304(ii)); and categorizing the digital product in either one of pre-defmed categories based

    upon a comparison of the total cut-off score and a UX assessment score, wherein the UX assessment score corresponds to a plurality of user interface (UI) components of the digital product (305).

2.  The method according to claim 1, wherein the set of delta weights are obtained based upon a set of user inputs on usage context of the digital product, and wherein each of delta weight amongst the set of delta weights correspond to one of the plurality of KPAs.

3. The method according to claim 1, wherein each of the plurality of highest delta weights is identified from the set of delta weights, and wherein each of the identified highest delta weight corresponds to at least one of the plurality of KPAs.

4. The method according to claim 1, wherein the step of categorizing the digital product is preceded by computing, based upon a set of guidelines scores, a plurality of earned score values, wherein each of earned score value amongst the plurality of earned score values corresponds to at least one of a KPA amongst the plurality of KPAs, and wherein each of a guidelines score amongst the set of guidelines scores correspond to at least one component of the digital product, wherein each of the plurality of KPAs correspond to one or more usability guidelines amongst a set of usability guidelines corresponding to a plurality of UI components of the digital product.

5. The method according to claim 1, wherein the step of assessing the UX of the digital product comprises auto-generating, based upon the UX assessment score, a set of recommendations by a recommendations engine, wherein the set of recommendations auto-generated correspond to one or more usability guidelines of the digital product, on one or more UX shortcomings of the digital product upon determining at least one of:

> (i) the UX assessment score is less than the total cut-off score;
> (ii) at least one earned score value amongst a plurality of earned score values is less than the corresponding KPA cut-off score.

6. The method according to claim 5, wherein the step of auto-generating the set of recommendations comprises providing suggestions by the recommendations engine for overcoming the one or more UX shortcomings of the digital product on determining at least one earned score value amongst the plurality of earned score values to be less than the corresponding KPA cut-off score.

7. A system (100) for quantitative assessment of a user experience (UX) of a digital product, the system (100) comprising:

> a memory (102) storing instructions;
> one or more communication interfaces (106); and
> one or more hardware processors (104) coupled to the memory (102) via the one or more communication interfaces (106), wherein the one or more hardware processors (104) are configured by the instructions to:

>> assign a set of default values (206) to each of a pre-assessment question amongst a set of pre-assessment questionnaire, wherein each of the set of default values (206) comprises a metric assigned to each of the pre-assessment question;
>> compute, based upon a set of delta weights (207) and each of the set of default values (206) assigned to each of the pre-assessment question, a set of weightages (210) for a plurality of Key Performance Attributes (KPAs) (205), wherein each of the set of weightages (210) corresponds to a KPA amongst the plurality of KPAs (205);
>> compute, based upon the set of weightages (210) and a sum total of a plurality of highest delta weights, a plurality of score values (209) for the plurality of KPAs (205), wherein each of score value amongst the plurality of score values (209) corresponds to a KPA amongst the plurality of KPAs (205);
>> perform, based upon the plurality of score values (209), a plurality of steps, wherein the plurality of steps comprise:

>>> (i) obtain, a set of relative weightage values (211) for the plurality of KPAs (205), wherein each of relative weightage value amongst the set of relative weightage values (211) correspond to a KPA amongst the plurality of KPAs (205); and
>>> (ii) generate, by using the set of relative weightage values (211), a total cut-off score (212) to assess the UX of the digital product; and

>> categorize the digital product in either one of pre-defined categories based upon a comparison of the total cut-off score (212) and a UX assessment score (213), wherein the UX assessment score (213) corresponds to a plurality of user interface (UI) components of the digital product.

8. The system (100) according to claim 7, wherein the one or more hardware processors (104) are configured to obtain the set of delta weights (207) based upon a set of user inputs on usage context of the digital product, and wherein each of delta weight amongst the set of delta weights (207) correspond to one of the plurality of KPAs (205).

9. The system (100) according to claim 7, wherein the one or more hardware processors (104) are configured to identify each of the plurality of highest delta weights from the set of delta weights (207), and wherein each of the highest delta weight corresponds to at least one of the plurality of KPAs (205).

10. The system (100) according to claim 7, wherein the one or more hardware processors (104) are configured to categorize the digital product by computing, based upon a set of guidelines scores (217), a plurality of earned score values (216), wherein each of earned score value amongst the plurality of earned score values (216) corresponds to at least one of a KPA amongst the plurality of KPAs (205), and wherein each of a guidelines score amongst the set of guidelines scores (217) correspond to at least one component of the digital product, wherein each of the plurality of KPAs (205) correspond to one or more usability guidelines amongst a set of usability guidelines corresponding to a plurality of UI components of the digital product.

11. The system (100) according to claim 7, wherein the one or more hardware processors (104) are configured to assess the UX of the digital product by auto-generating, based upon the UX Assessment score (213), a set of recommendations (215) by a recommendations engine (214), wherein the set of recommendations (215) auto-generated correspond to one or more usability guidelines of the digital product, on one or more UX shortcomings of the digital product upon determining at least one of:

(i) the UX Assessment score (213) is less than the total cut-off score (212); and
(ii) at least one earned score value amongst a plurality of earned score values (216) is less than the corresponding KPA cut-off score.

12. The system (100) according to claim 11, wherein the one or more hardware processors (104) are configured to provide suggestions by the recommendations engine (214) for overcoming the one or more UX shortcomings of the digital product on determining at least one earned score value amongst the plurality of earned score values (216) to be less than the corresponding KPA cut-off score.

13. The system (100) according to claim 7, wherein the one or more hardware processors (104) are configured to categorize the digital product by computing the UX assessment (207) based upon a plurality of aggregated components scores (217), and wherein each of a guidelines score amongst the set of guidelines scores (217) correspond to at least one of the plurality of KPAs (205).

14. The system (100) according to claim 7, wherein each of the plurality of KPAs (205) correspond to at least either one of usability parameters amongst a set of usability parameters and to a plurality of UI components of the digital product.

15. A non-transitory computer-readable medium having embodied thereon a computer readable program, wherein the computer readable program, when executed by one or more hardware processors, cause:

assigning, by one or more hardware processors, a set of default values to each of a pre-assessment question amongst a set of pre-assessment questionnaire, wherein each of the set of default values comprises a metric assigned to each of the pre-assessment question (301);
computing, based upon a set of delta weights and each of the set of default values assigned to each of the pre-assessment question, a set of weightages for a plurality of Key Performance Attributes (KPAs), wherein each of the set of weightages corresponds to a KPA amongst the plurality of KPAs (302);
computing, based upon the set of weightages and a sum total of a plurality of highest delta weights, a plurality of score values for the plurality of KPAs, wherein each of score value amongst the plurality of score values corresponds to a KPA amongst the plurality of KPAs (303);
performing, based upon the plurality of score values, a plurality of steps, wherein the plurality of steps comprise (304):

(iii) obtaining, a set of relative weightage values for the plurality of KPAs, wherein each of relative weightage value amongst the set of relative weightage values correspond to a KPA amongst the plurality of KPAs (304(i)); and
(iv) generating, by using the set of relative weightage values, a total cut-off score to assess the UX of the digital product (304(ii)); and categorizing the digital product in either one of pre-defined categories based

upon a comparison of the total cut-off score and a UX assessment score, wherein the UX assessment score corresponds to a plurality of user interface (UI) components of the digital product (305).

EP 3 561 751 A1

SYSTEM 100

MEMORY 102

HARDWARE
PROCESSOR(S) 104

INTERFACE(S) 106

FIG. 1

24

Administrator

Service Portal 201

Request for Assessment

Product Manager

Developer

Administration Framework 202

User Role Management

Product and Version Management

Access control to assessment and scores

Questionnaire Template Management 204

Plurality of KPAs 205

Set of Delta Weights 207

Set of Default Values 206

Set of Pre-assessment Questionnaire 208

User Experience (UX) Framework 203

Score Viewer

What-if Analysis

Self-assessment

Content Specification

Assessor

Operations

Product Manager

Recommendations Engine 214

Set of Recommendations 215

Final Report

Computations

Set of Weightages 210

Set of Guidelines Score 217

Plurality of Score Values 209

Set of relative weightage values 211

Plurality of Earned Score Values 216

Total Cut-off score 212

UX-Assessment Score 213

FIG. 2

Assigning, by one or more hardware processors, a set of default values to each of a pre-assessment question amongst a set of pre-assessment questionnaire, wherein each of the set of default values comprises a metric assigned to each of the pre-assessment question

└ 301

Computing, based upon a set of delta weights and each of the set of default values assigned to each of the pre-assessment question, a set of weightages for a plurality of Key Performance Attributes (KPAs), wherein each of the set of weightages corresponds to a KPA amongst the plurality of KPAs

└ 302

Computing, based upon the set of weightages and a sum total of a plurality of highest delta weights, a plurality of score values for the plurality of KPAs, wherein each of score value amongst the plurality of score values corresponds to a KPA amongst the plurality of KPAs

└ 303

A

FIG. 3A

Performing, based upon the plurality of score values, a plurality of steps, wherein the plurality of steps comprise: (i) obtaining, a set of relative weightage values for the plurality of KPAs, wherein each of relative weightage value amongst the set of relative weightage values correspond to a KPA amongst the plurality of KPAs; and (ii) generating, by using the set of relative weightage values, a total cut-off score to assess the UX of the digital product — 304

Categorizing the digital product in either one of pre-defined categories based upon a comparison of the total cut-off score and a UX assessment score, wherein the UX assessment score corresponds to a plurality of user interface (UI) components of the digital product — 305

FIG. 3B

Europäisches
Patentamt

European
Patent Office

Office européen
des brevets

**EUROPEAN SEARCH REPORT**

Application Number

EP 18 20 9394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 642 444 A1 (TATA CONSULTANCY SERVICES LTD [IN]) 25 September 2013 (2013-09-25) * paragraphs [0015] - [0020], [0027]; figure 1 * ----- | 1-15 | INV. G06Q10/10 |
| X | US 2015/040043 A1 (SAKHARDANDE PRACHI [IN] ET AL) 5 February 2015 (2015-02-05) * paragraphs [0013] - [0019], [0031]; figure 1 * ----- | 1-15 | |
| X | US 2015/363090 A1 (SARANGDHAR ANIKET MOHAN [IN] ET AL) 17 December 2015 (2015-12-17) * paragraphs [0015] - [0020], [0027]; figure 1 * ----- | 1-15 | |

| | | | TECHNICAL FIELDS SEARCHED (IPC) |
|---|---|---|---|
| | | | G06Q |

The present search report has been drawn up for all claims

| Place of search | Date of completion of the search | Examiner |
|---|---|---|
| Munich | 18 March 2019 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 561 751 A1

### ANNEX TO THE EUROPEAN SEARCH REPORT
### ON EUROPEAN PATENT APPLICATION NO.

EP 18 20 9394

18-03-2019

| Patent document cited in search report | | Publication date | Patent family member(s) | | Publication date |
|---|---|---|---|---|---|
| EP 2642444 | A1 | 25-09-2013 | EP US | 2642444 A1 2013254735 A1 | 25-09-2013 26-09-2013 |
| US 2015040043 | A1 | 05-02-2015 | NONE | | |
| US 2015363090 | A1 | 17-12-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201821015698